# EUROPÄISCHE PATENTSCHRIFT

(11) **EP 3 347 617 B1**
(45) Veröffentlichungstag und Bekanntmachung des Hinweises auf die Patenterteilung: **28.08.2019**
(21) Anmeldenummer: 16732293.2
(22) Anmeldetag: 27.06.2016
(51) Int. Cl.: F16F 9/54, B60G 15/06

(54) **FEDERBEINSTÜTZLAGER**
SPRING STRUT MOUNT
PALIER DE JAMBE DE FORCE

(30) Priorität: 10.09.2015 DE 102015217326
(43) Veröffentlichungstag der Anmeldung: 18.07.2018
(73) Patentinhaber: ContiTech Vibration Control GmbH, 30165 Hannover (DE)
(72) Erfinder: WÖHLER, Stefan, 31234 Edemissen (DE); BUSCH, Jirka, 29323 Jeversen (DE)
(74) Vertreter: Finger, Karsten
(86) Internationale Anmeldenummer: PCT/EP2016/064768
(87) Internationale Veröffentlichungsnummer: WO 2017/041918

(56) Entgegenhaltungen:
- DE-A1- 3 619 942
- DE-A1- 10 332 801
- DE-A1- 10 335 956
- FR-A1- 2 919 909

## Beschreibung

Die Erfindung betrifft ein Federbeinstützlager, enthaltend ein Dämpferelement und ein Lagergehäuse, mit einem ersten und einem zweiten Gehäuseteil, wobei die Gehäuseteile mittels eines Gewindes unter Umfassung des Dämpfungselementes miteinander verschraubbar sind.

Federbeinstützlager sind in großer Vielfalt seit langem bekannt. Sie dienen dazu, die Kolbenstangen eines Schwingungsdämpfers elastisch an einer Karrosserie eines Kraftfahrzeugs derart zu befestigen, dass eine gute Schwingungsdämpfung gewährleistet ist. Um die Dauerfestigkeit der Dämpfungselemente bei einer guten Kraftübertragung zu gewährleisten, sind die Dämpfungselemente meist in einem Gehäuse mindestens teilweise eingebettet.

Die DE 77 10 534 U zeigt ein derartiges Lager, wobei hier das Dämpfungselement nur teilweise vom gehäuseartig geformten Blechen umfasst ist. In der DE 103 35 956 A1 ist eine Federkonstruktion offenbart, bei der das Dämpfungselement in ein zweiteiliges Rundgehäuse eingeschlossen ist. In einer Ausführungsform dieser Schrift ist das Gehäuse mittels Gewinde verschraubbar, so dass das Dämpfungselement zwischen den Gehäuseteilen fest einspannbar ist. Bei dieser Lehre ist jedoch die Sicherheit gegen Losdrehen nur durch die Vorspannung des Dämpfungselementes gegeben, so dass die Gefahr besteht, dass sich die Verschraubung lösen kann.

Der Erfindung liegt die Aufgabe zugrunde, ein Federbeinstützlager der eingangs geschilderten Art so zu verbessern, dass die Gehäuseteile sich nicht im Betrieb voneinander lösen können.

Diese Aufgabe wird dadurch gelöst, dass die Gehäuseteile eine Rastvorrichtung aufweisen, die ein Verschrauben ermöglicht, ein lösen des Gewinde jedoch verhindert. Durch eine derartige Rastvorrichtung ist es möglich, die Verschraubung der Gehäuseteile auch bei geringen Vorspannungen des Dämpfungselementes sicher gegen Lösen vorzunehmen.

In einer Weiterbildung der Erfindung ist die Rastvorrichtung am Umfang der Gehäuseteile angeordnet, wobei die Rastvorrichtung zweiteilig ausgebildet ist und ein erstes Teil der Rastvorrichtung auf dem Umfang verteilte Nasen aufweist, die in das Innere des Gehäuses weisen und ein zweites Teil der Rastvorrichtung radial nach innen weisende Nuten aufweist, die korrespondierend zu den Nasen des ersten Teils auf dem Umfangs des zweiten Teils der Rastvorrichtung verteilt sind, erstes und zweites Teil der Rastvorrichtung derartig aufeinander abgestimmt sind, dass die Nasen des ersten Teils der Rastvorrichtung beim montierten Gehäuseteilen in die Nuten des zweiten Teils der Rastvorrichtung eingreifen, wobei die Nuten in Umfangsrichtung einseitig jeweils eine von innen nach außen ansteigende Schrägung aufweisen.

Eine Rastvorrichtung der genannten Art ermöglicht, das Dämpfungselement im Gehäuse genau vorzuspannen, ohne Gefahr zu laufen, dass die Verschraubung der Gehäuseteile sich löst. Durch die Gestaltung der Nuten mit einer Schrägung ist leicht möglich, die Nasen von einer Nut zur nächsten weiter zu drehen, da die Elastizität der Materialien eine entsprechende elastische Verformung der Rastvorrichtung erlaubt. Da die Schrägung nur einseitig vorgesehen ist, ist dagegen ein Zurückdrehen des Nasenteils der Rastvorrichtung gegen das Nutenteil nicht möglich, ohne die Rastvorrichtung zu zerstören. Damit ist eine hohe Sicherheit gegen lösende Verschraubung gegeben.

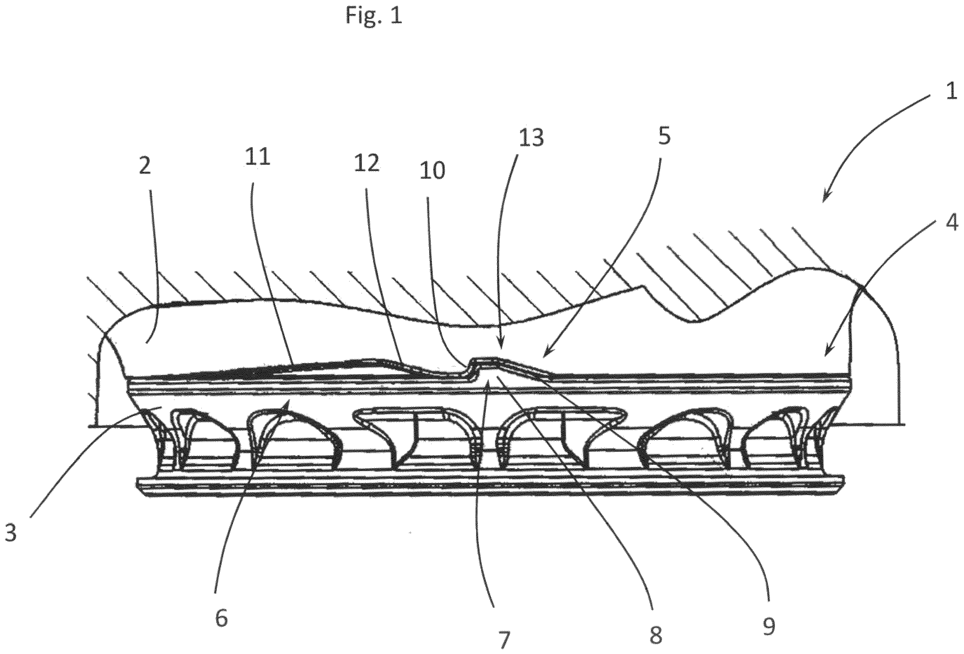

Anhand der Zeichnung wird nachstehend ein Beispiel der Erfindung näher erläutert.

Die einzige Figur zeigt einen unteren Abschnitt eines Federbeinstützlagers 1 in einem Teilschnitt. Das Federbeinstützlager 1 weist ein oberes Gehäuseteil 2 und ein unteres Gehäuseteil 3 auf. Die Gehäuseteile 2 und 3 sind in axialer Richtung miteinander verschraubbar und umfassen ein hier nicht sichtbares, zwischen den Gehäuseteilen 2 und 3 eingespanntes Dämpfungselement. Das obere Gehäuseteil 2 weist an seinem unteren Ende 4 ein Rastprofil 5 auf.

Das untere Gehäuseteil 3 weist an seinem oberen Ende 6 ein weiteres Rastprofil 7 auf. Das Rastprofil 7 zeigt im Wesentlichen eine dem oberen Gehäuseteil 2 zugewandte Nase 8 mit einer Schrägung 9 und einem Steilabfall 10.

Das Rastprofil 5 des oberen Gehäuseteils 2 weist eine erste schräge Flanke 11 auf, die der Steigung des hier nicht gezeigten Gewindes entspricht. Der schrägen Flanke 11 folgt eine Schrägung 12 deren Steigung der der schrägen Flanke 11 entgegengesetzt ist. Anschließend folgt eine Rastnut 13, deren Form mit der Nase 8 des Rastprofils 7 korrespondiert.

Bei der Verschraubung der Gehäuseteile 2 und 3 bewegen sich die Gehäuseteile 2 und 3 aufeinander zu. Die Nase 8 kann dabei in Kontakt zur schrägen Flanke 11 kommen, bis sie mit ihrer Schrägung 9 gegen die Schrägung 12 stößt. Bei weiterer Verschraubung gleiten die Schrägungen 9 und 12 aufeinander ab, was durch eine Elastizität der Gehäuseteile 2 und 3 und des genau einzuhaltenden Spieles in den Gewindegängen möglich ist. Zum Ende der Schraubbewegung gleitet die Nase 8 in die korrespondierende Rastnut 13. Durch die Form der Rastnut 13 und den Steilabfall 10 der Nase 8 ist ein Zurückdrehen des Gehäuseteils 2 gegen das Gehäuseteil 3 nicht mehr möglich, was ein unbeabsichtigtes Öffnen des Federbeinstützlagers verhindert.

### Bezugszeichenliste

### (Teil der Beschreibung)

- 1: Federbeinstützlager
- 2: oberes Gehäuseteil
- 3: unteres Gehäuseteil
- 4: unteres Ende des Gehäuseteils 2
- 5: Rastprofil des oberen Gehäuseteils 2
- 6: oberes Ende des Gehäuseteils 3
- 7: Rastprofil des Gehäuseteils 3
- 8: Nase des Rastprofils 7
- 9: Schrägung des Nase 8
- 10: Steilabfall der Nase 8
- 11: schräge Flanke des Rastprofils 5
- 12: Schrägung des Rastprofils 5
- 13: Rastnut des Rastprofils 5

## Patentansprüche

1. Federbeinstützlager (1), enthaltend ein Dämpferelement und ein Lagergehäuse (2, 3), mit einem ersten (2) und einem zweiten (3) Gehäuseteil, wobei die Gehäuseteile (2, 3) mittels eines Gewindes unter Umfassung des Dämpfungselementes miteinander verschraubbar sind, **dadurch gekennzeichnet, dass** die Gehäuseteile (2, 3) eine Rastvorrichtung (5, 7, 8, 11, 12, 13) aufweisen, die ein Verschrauben ermöglicht, ein lösen des Gewinde jedoch verhindert.

2. Federbeinstützlager(1) nach Anspruch 1, **dadurch gekennzeichnet, dass** die Rastvorrichtung (5, 7, 8, 11, 12, 13) am Umfang der Gehäuseteile (2, 3) angeordnet ist, wobei die Rastvorrichtung (5, 7, 8, 11, 12, 13) zweiteilig ausgebildet ist und ein erstes Teil (5, 11, 12, 13) der Rastvorrichtung (5, 7, 8, 11, 12, 13) auf dem Umfang verteilte mindestens eine Nase (8) aufweist, die in das Innere des Gehäuses (2, 3) weisen und ein zweites Teil (7) der Rastvorrichtung (5, 7, 8, 11, 12, 13) radial nach innen weisende Nuten (13) aufweist, die korrespondierend zu den Nasen (8) des ersten Teils (5) auf dem Umfangs des zweiten Teils (7) der Rastvorrichtung (5, 7, 8, 11, 12, 13) verteilt sind, erstes und zweites Teil (5, 7) der Rastvorrichtung (5, 7, 8, 11, 12, 13) derartig aufeinander abgestimmt sind, dass die Nasen (8) des ersten Teils (5) der Rastvorrichtung (5, 7, 8, 11, 12, 13) beim montierten Gehäuseteilen (2, 3) in die Nuten (13) des zweiten Teils (7) der Rastvorrichtung (5, 7, 8, 11, 12, 13) eingreifen, wobei die Nuten (8) in Umfangsrichtung einseitig jeweils eine von innen nach außen ansteigende Schrägung (9)aufweisen.

## Claims

1. Spring strut support bearing (1), comprising a damper element and a bearing housing (2, 3), having a first (2) and a second (3) housing part, wherein the housing parts (2, 3) can be screwed together, by means of a thread, so as to encompass the damping element, **characterized in that** the housing parts (2, 3) have a detent device (5, 7, 8, 11, 12, 13) which permits a screwing action but prevents a loosening of the thread.

2. Spring strut support bearing (1) according to Claim 1, **characterized in that** the detent device (5, 7, 8, 11, 12, 13) is arranged on the circumference of the housing parts (2, 3), wherein the detent device (5, 7, 8, 11, 12, 13) is of two-part form, and a first part (5, 11, 12, 13) of the detent device (5, 7, 8, 11, 12, 13) has, distributed on the circumference, at least one lug (8) which points into the interior of the housing (2, 3), and a second part (7) of the detent device (5, 7, 8, 11, 12, 13) has radially inwardly pointing grooves (13) which are distributed on the circumference of the second part (7) of the detent device (5, 7, 8, 11, 12, 13) correspondingly to the lugs (8) of the first part (5), the first and second parts (5, 7) of the detent device (5, 7, 8, 11, 12, 13) are coordinated with one another such that the lugs (8) of the first part (5) of the detent device (5, 7, 8, 11, 12, 13) engage into the grooves (13) of the second part (7) of the detent device (5, 7, 8, 11, 12, 13) in the assembled state of the housing parts (2, 3), wherein the grooves (8) have, at one side in the circumferential direction, in each case one slope (9) which rises from the inside to the outside.

## Revendications

1. Palier de jambe de force (1), contenant un élément amortisseur et un logement de palier (2, 3), avec une première (2) et une deuxième (3) partie de logement, les parties de logement (2, 3) pouvant être vissées l'une à l'autre au moyen d'un filetage en entourant l'élément d'amortissement, **caractérisé en ce que** les parties de logement (2, 3) présentent un dispositif d'encliquetage (5, 7, 8, 11, 12, 13) qui permet un vissage mais empêche toutefois un desserrage du filetage.

2. Palier de jambe de force (1) selon la revendication 1, **caractérisé en ce que** le dispositif d'encliquetage (5, 7, 8, 11, 12, 13) est disposé sur la périphérie des parties de logement (2, 3), le dispositif d'encliquetage (5, 7, 8, 11, 12, 13) étant réalisé en deux parties et une première partie (5, 11, 12, 13) du dispositif d'encliquetage (5, 7, 8, 11, 12, 13) présentant au moins un ergot (8) réparti sur la périphérie, lesquels ergots sont tournés vers l'intérieur du logement (2, 3) et une deuxième partie (7) du dispositif d'encliquetage (5, 7, 8, 11, 12, 13) présentant des rainures (13) orientées radialement vers l'intérieur qui sont réparties sur la périphérie de la deuxième partie (7) du dispositif d'encliquetage (5, 7, 8, 11, 12, 13) de manière correspondant aux ergots (8) de la première partie (5), la première et la deuxième partie (5, 7) du dispositif d'encliquetage (5, 7, 8, 11, 12, 13) étant ajustées l'une à l'autre de telle sorte que les ergots (8) de la première partie (5) du dispositif d'encliquetage (5, 7, 8, 11, 12, 13), lorsque les parties de logement (2, 3) sont montées, s'engagent dans les rainures (13) de la deuxième partie (7) du dispositif d'encliquetage (5, 7, 8, 11, 12, 13), les rainures (8) présentant, dans la direction périphérique, à chaque fois d'un côté, un chanfrein (9) montant de l'intérieur vers l'extérieur.
